# EUROPEAN PATENT APPLICATION

(11) **EP 2 154 874 A1**
(43) Date of publication of application: **17.02.2010**
(21) Application number: 09006292.8
(22) Date of filing: 08.05.2009
(51) Int. Cl.: H04M 1/04, H02J 7/00

(54) **Charging device for mobile phones capable of connecting to the internet and to a local area network**

(30) Priority: 15.08.2008 TW 97131084
(71) Applicant: ASUSTeK Computer Inc., Peitou, Taipei City (TW)
(72) Inventor: Chang, Po-Yao, Peitou Taipei City (TW); Dan, Ten-Long, Peitou Taipei City (TW)
(74) Representative: Görz, Ingo

(57) **Abstract**

A charging device (20) capable of connecting to the Internet through a mobile phone includes a charging unit (23) for charging the mobile phone (26), a wireless communication unit (24) for performing wireless communication through the mobile phone (26), so as to access a wireless network, and a local area network routing unit (25) coupled to the wireless communication unit (24) for transmitting data packets to a local area network when the wireless communication unit (24) access the network through the mobile phone (26).

## Description

The present invention relates to a charging device capable of connecting to Internet according to the pre-characterizing clauses of claims 1.

With the evolution of mobile communication technology, a utility rate of a mobile communication device is getting higher and higher, and the chance of utilizing mobile phone to connect to Internet is also increasing. Therefore, in any place with wireless Internet access, a user can enjoy wireless communication services, such as browsing Internet, checking Email, looking parking information up, watching WebTV, etc through a mobile phone at any time.

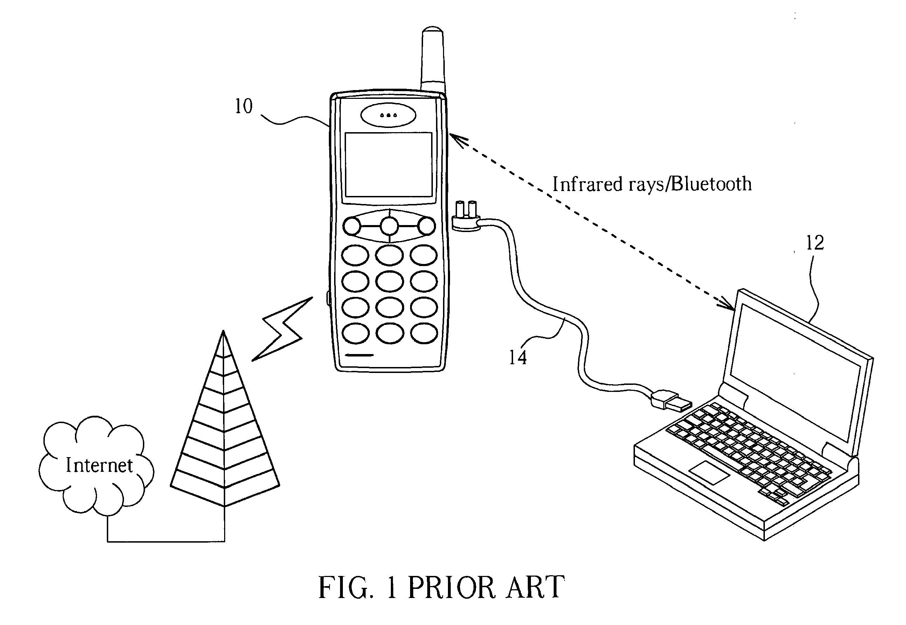

However, in order to connect to Internet through a mobile phone, a demodulator driver program of the mobile phone needs to be installed in an internet access device first, such as a laptop, or a PDA, and the internet access device can connect to the mobile phone through an interface, such as Universal Serial Bus, infrared rays, Bluetooth, etc. Please refer to Fig. 1, which is a schematic diagram of connection by utilizing a mobile phone. As can be seen from Fig. 1, when using a mobile phone 10 as a medium for connecting to Internet, a terminal apparatus 12, such as laptop or PDA, etc needs to be connected to the mobile phone 10 for performing wireless communication through infrared rays, Bluetooth, or Universal Serial Bus 14. However, in this situation, the mobile phone is limited to be connected with a terminal apparatus at the same time; thereby just a terminal apparatus can perform wireless communication through the mobile phone at one time. In addition, since power of the mobile phone is come from a battery, using convenience of connecting to Internet through the mobile phone is decreased due to power supply limitation.

This in mind, the present invention aims at providing a charging device capable of connecting to Internet, so as to provide a stable power to a mobile phone, and supporting a plurality of terminal apparatuses to perform wireless communication.

This is achieved by a charging device capable of connecting to Internet according to claims 1. The dependent claims pertain to corresponding further developments and improvements.

As will be seen more clearly from the detailed description following below, the claimed charging device capable of connecting to Internet includes a charging unit, a wireless communication unit, and a local area network routing unit.

In the following, the invention is further illustrated by way of example, taking reference to the accompanying drawings. Thereof
Fig. 1 is a schematic diagram of connection by utilizing a mobile phone for connecting to Internet according to the prior art,
Fig. 2 is a schematic diagram of a charging device according to an embodiment of the present invention, and
Fig. 3 is a schematic diagram of network connection according to an embodiment of the present invention.

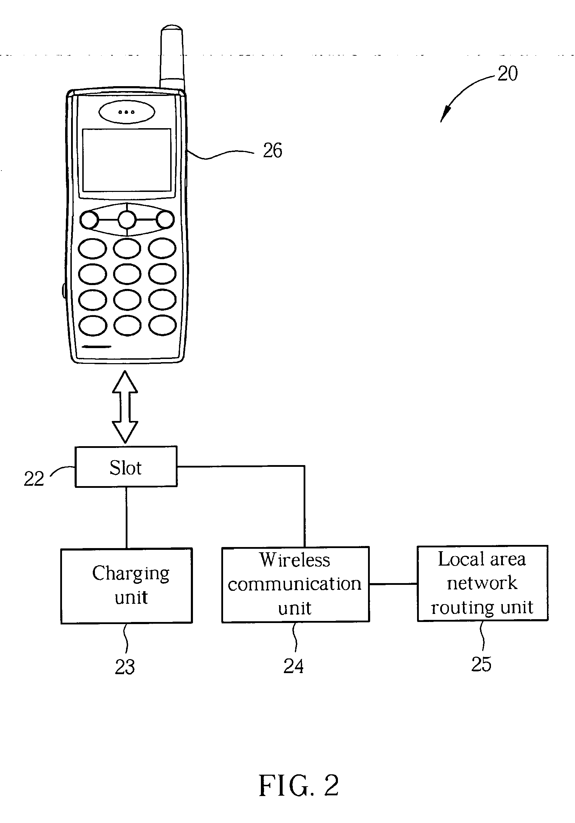

Please refer to Fig. 2, which is a schematic diagram of a charging device 20 capable of connecting to Internet according to an embodiment of the present invention. The charging device 20 includes a slot 22, a charging unit 23, a wireless communication unit 24, and a local area network routing unit 25. The slot 22 is installed on a housing (the housing is not shown in the Fig. 2) for embedding a mobile phone 26. The charging unit 23 is installed on the housing, for charging the mobile phone 26 when the mobile phone 26 is embedded in the slot 22. The wireless communication unit 24 accesses the internet through the mobile phone 26, so as to access a wireless network. When the wireless communication unit 24 accesses the internet through the mobile phone 26, the local area network routing unit 25 transmits data packets of the network to a local area network through a preset network interface protocol. In other words, when the mobile phone 26 is embedded in the slot 22, the charging unit 23 of the charging device 20 charges the mobile phone 26 for maintaining power of the mobile phone 26. In addition, a user can use the mobile phone 26 to perform wireless communication, so as to access a wireless network through the wireless communication unit 24, and a terminal apparatus, such as, laptop, PDA, etc (electronic devices which can perform wireless communication) in the local area network can connect to Internet at the same time through the local area network routing unit 25 transmitting data packets of the network to a local area network.

Therefore, the user just needs to embed the mobile phone 26 in the slot 22 for charging the mobile phone 26 through the charging device 20; meanwhile, the user can use different terminal apparatuses for connecting to Internet.

Note that, the charging device 20 shown in Fig. 2 is an embodiment of the present invention, and those skilled in the art can make alterations and modifications accordingly. For example, the charging device 20 further comprises a power detection unit for detecting power state of the mobile phone 26 when the mobile phone 26 is embedded in the slot 22, and a power indicator for indicating a power state of the mobile phone 26. In addition, the charging device 20 further comprises a wireless network state indicator coupled to the wireless communication unit 24, for indicating a connecting state of the wireless network, or a local area network state indicator coupled to the local area network routing unit 25, for indicating the connecting state of the local area network. Moreover, the charging device 20 includes a control unit coupled to the charging unit 23, the wireless communication unit 24 and the local area network routing unit 25, for controlling operations of charging, wireless communication, local area network access, etc.

Moreover, in the embodiment of the present invention, the wireless network is preferably a wireless network of a high speed packet access system, such as a high speed downlink packet access network or high speed uplink packet access network associated with the third generation global system for mobile communications. In addition, a network interface for the local area network routing unit 25 is not limited, and could be a wireless local area network interface, such as IEEE 802.11a, IEEE 802.11b, IEEE 802.11g, IEEE 802.11 n, etc for transmitting radio waves through a wireless local area network antenna. Besides built a wireless local area network, the local area network routing unit 25 can also build a wired local area network, such as transmitting packets of the wireless communication unit 24 by RJ-45 port.

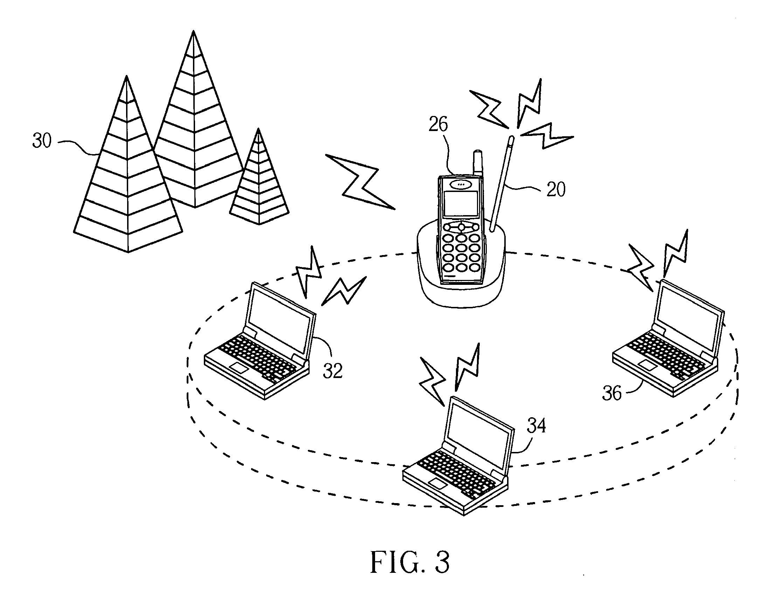

Therefore, through the charging device 20, the embodiment of the present invention can connect to Internet through different terminal apparatuses when charging the mobile phone 26, as shown in Fig. 3. In Fig. 3, when the mobile phone 26 is embedded in the charging device 20, the charging device 20 can not only perform charging for the mobile phone 26, but also perform wireless communication through the mobile phone 26, so as to connect with a base station 30 for building a wireless communication. In addition, the charging device 20 can transmit wireless data packets through the preset wireless local area network interface to make the terminal apparatuses 32, 34, 36 in a range of wireless local area network to perform wireless communication at the same time.

In conclusion, the charging device of the embodiment of the present invention can perform wireless communication through the mobile phone when charging the mobile phone, and transmit data packages trough the preset local area network interface to make different terminal apparatuses connect to Internet for increasing utilization convenience.

## Claims

1. A charging device (20) capable of connecting to Internet **characterized by:**
a charging unit (23) for charging the mobile phone (26);
a wireless communication unit (24) for performing wireless communication through the mobile phone (26), so as to access a wireless network; and
a local area network routing unit (25) coupled to the wireless communication unit (24) for transmitting data packets of the network to a local area network according a network interface protocol when the wireless network unit (24) access to the network through the mobile phone (26).

2. The charging device (20) of claim 1, **characterized in that** the wireless network is a wireless network of a high speed downlink packet access system.

3. The charging device (20) of claim 1, **characterized in that** the local area network is a wireless local area network.

4. The charging device (20) of claim 1 **characterized by** a wireless local area network antenna coupled to the local area network routing unit (25).

5. The charging device (20) of claim 1 **characterized by** an RJ-45 local area network port coupled to the local area network routing unit (25), for connecting to the local area network.

6. The charging device (20) of claim 1 **characterized by** a power detection unit for detecting power of the mobile phone (26).

7. The charging device (20) of claim 1 **characterized by** a wireless network state indicator coupled to the wireless communication unit (24), for indicating a connecting state of the wireless network.

8. The charging device (20) of claim 1 **characterized by** a local area network state indicator coupled to the local area network routing unit (25), for indicating a connecting state of the local area network.

9. The charging device (20) of claim 1 **characterized by** a control unit coupled to the charging unit (23), the wireless communication unit (24) and the local area network routing unit (25), for controlling operations of the charging unit (23), the wireless communication unit (24) and the local area network routing unit (25).
